# EUROPEAN PATENT APPLICATION

(11) **EP 3 916 993 A1**
(43) Date of publication of application: **01.12.2021**
(21) Application number: 19911871.2
(22) Date of filing: 08.11.2019
(51) Int. Cl.: H02M 9/02, H02M 1/34, H02M 3/155, H02M 3/28, H02M 7/537

(54) **DC PULSED POWER SUPPLY DEVICE**

(30) Priority: 24.01.2019 JP 2019010636
(71) Applicant: Kyosan Electric Mfg. Co., Ltd., Tsurumi-ku, Yokohama-shi Kanagawa 230-0031 (JP)
(72) Inventor: YUZURIHARA Itsuo, Yokohama-shi, Kanagawa 230-0031 (JP); ADACHI Toshiyuki, Yokohama-shi, Kanagawa 230-0031 (JP); YONEYAMA Tomohiro, Yokohama-shi, Kanagawa 230-0031 (JP); MIYAZAKI Koichi, Yokohama-shi, Kanagawa 230-0031 (JP)
(74) Representative: Hoffmann Eitle
(86) International application number: PCT/JP2019/043834
(87) International publication number: WO 2020/152946

(57) **Abstract**

A DC pulse power supply device (1) includes: a DC power supply (10); a pulsing unit (20A) that generates a pulse output using a step-up chopper circuit connected to the DC power supply; and a regeneration unit (30). The regeneration unit regenerates, to the DC power supply, the voltage component among a reactor voltage (VDCL) of a DC reactor (21A) in the step-up chopper circuit exceeding a set voltage. Thus, the voltage of the step-up chopper circuit is clamped to a prescribed voltage to suppress excessive voltage increases. Moreover, resistor energy consumption is eliminated and the efficiency of supplying power to a load is boosted by regeneration to the DC power supply.

## Description

### Technical Field

The present invention relates to a DC pulse power supply device that supplies a pulse output to a load.

### Background Art

A pulse output from a DC pulse power supply device is a high-frequency output that continuously turns on and off a DC voltage in a range of several Hz to hundreds kHz.

The DC pulse power supply device is used for supplying the pulse output to a load of a plasma generation device, an exciting of a pulse laser, an electrical discharge machine or similar. In the case of using the DC power supply device as plasma generation device, the pulse output is supplied between electrodes in a plasma generating chamber, so as to ignite plasma generated by the electrical discharge occurring between the electrodes and keep the generated plasma.

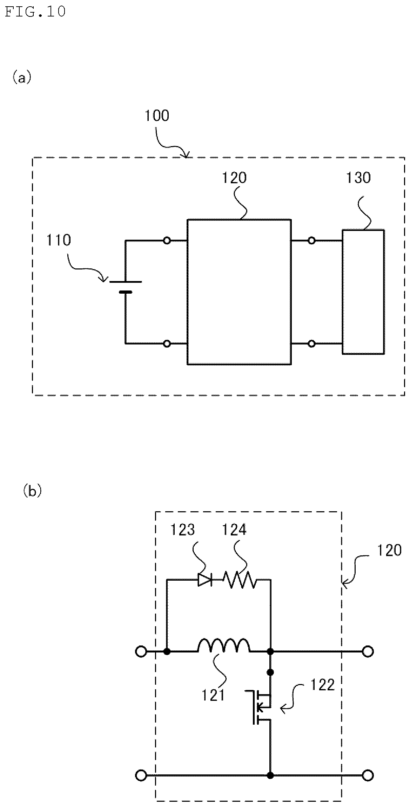

FIG. 10(a) shows a configuration example of the DC pulse power supply device. It is known that a DC pulse power supply device has a step-up chopper circuit as a circuit for generating a pulse form. A DC pulse power supply device 100 consists of a DC power supply 110 and a step-up chopper circuit 120, the DC power supply 110 supplying to a load 130 with a pulse output obtained by multiplying a DC voltage by the step-up chopper circuit 120 (see Patent Literatures 1 and 2).

FIG. 10(b) illustrates a configuration example of the step-up chopper circuit (see Patent Literature 3). The step-up chopper circuit 120 is configured by connecting an inductor 121 in series between the DC power supply and the load while connecting a switching element 122 in parallel to the load, so as to form a pulse output that is multiplied in accordance with a duty ratio of a time width between an ON period and an OFF period of the switching element 122. In the above ON/OFF operation, energy is accumulated in a DC reactor of the inductor 121 depending on the time width of the ON period, thereby forming a pulse output with amplitude boosted according to the build-up energy. The amplitude of the pulse output to be boosted is defined depending on the duty ratio between the ON period and OFF period of the switching element, and the amplitude may exceed the defined amplitude due to vibration or others created during the OFF period of the switching element 122.

In the step-up chopper circuit shown in FIG. 10(b), a series circuit consisting of a diode 123 with the same polarity as the power supply and a resistor 124 is connected in parallel to the inductor 121 to allow the resistor 124 to consume a reverse voltage produced by the energy accumulated in the inductor 121, thereby clamping the voltage of the pulse output to suppress an excessive rise in the voltage.

### Citation List

### Patent Literature

[Patent Literature 1] Japanese Patent Laid-Open Publication No. 222258/1996 (FIG. 1, Paragraph 0012)
[Patent Literature 2] Japanese Patent Laid-Open Publication No. 2006-6053 (FIG. 1)
{Patent Literature 3} Japanese Patent Laid-Open Publication No. 252165/1989 (FIG. 1)

### Summary of Invention

### Problems to be Solved by the Invention

Patent Literature 3 suggests a step-up chopper circuit, in which a parallel-connected resistor is allowed to consume accumulated energy in a DC reactor to thereby suppress an excessive rise in a voltage. As above, since a component of electric power to be supplied from a DC power supply to a load is consumed by the resistor as thermal energy, there is a problem of decrease in power supply efficiency.

It is an object of the present invention to solve the above-described problem, and accomplish the suppression of the excessive rise in the step-up chopper circuit in the DC pulse power supply device as well as the increase in the efficiency of the power supply.

### Means for Solving the Problem

The DC pulse power supply device of the present invention regenerates a reactor voltage of a DC reactor of a set-up chopper circuit to a DC power supply. Consequently,
(1) the voltage of the step-up chopper circuit is clamped to a predetermined voltage to suppress the excessive rise in the voltage, and
(2) the voltage is regenerated to the DC power supply, so as to eliminate energy consumption by a resistor and increase the efficiency of power supply to a load.

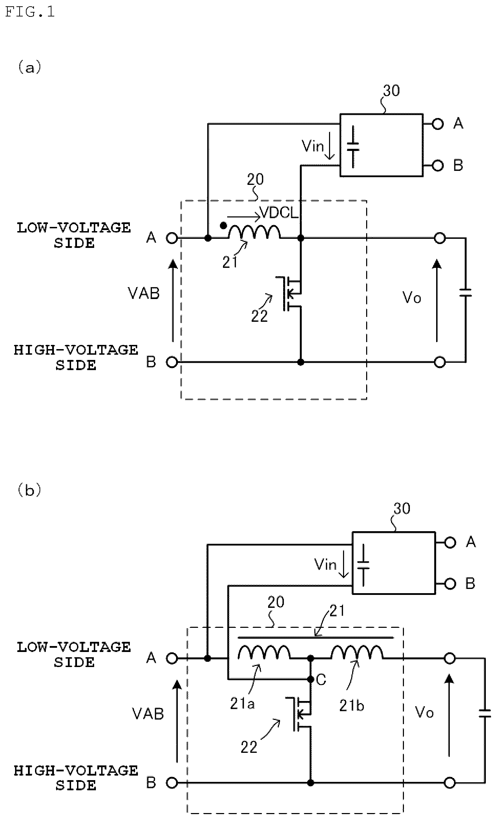

The DC pulse power supply device of the invention comprises a DC power supply, a pulsing unit that generates a pulse output by using a step-up chopper circuit connected to the DC power supply, and a regeneration unit that regenerates an excess voltage component to the DC power supply. The regeneration unit regenerates a voltage component of exceeding a set voltage among a reactor voltage of a DC reactor of the step-up chopper circuit to the DC power supply. FIGS. 1(a) and 1(b) illustrate schematic configurations of the pulsing unit and the regeneration unit of the DC pulsed power supply device of the invention.

### (Pulsing Unit)

A pulsing unit 20 comprises a step-up chopper circuit consisting of a DC reactor 21 connected in series between a DC power supply and a load, and a switching element 22 connected in parallel to the load. A regeneration unit 30 is for inputting a reactor voltage VDCL of the DC reactor 21 to regenerate an excessive voltage component (VDCL-Vin) that exceeds a regeneration input voltage Vin, which is a set voltage, to the DC power supply. FIG. 1 shows an example that indicates terminals on the DC power supply side with A and B, while indicating a terminal on a low-voltage side with A and a terminal on a high-voltage side with B. Furthermore, FIG. 1(a) shows an example in which the DC reactor of the step-up chopper circuit consists of a non-tapped autotransformer, and FIG. 1(b) shows an example in which the DC reactor of the step-up chopper circuit consists of a tapped autotransformer.

In the pulsing unit 20, accumulated energy is stored in the DC reactor 21 during an ON operation of the step-up chopper circuit, and the accumulated energy causes the generation of a reactor voltage in the DC reactor 21 during an OFF operation. The ON and OFF operations of the step-up chopper circuit is repeated to boost the reactor voltage.

### (Regeneration Unit)

The regeneration unit 30 does not regenerate a voltage when the reactor voltage VDCL does not exceed the set voltage, while regenerating a component of the voltage exceeding the set voltage to the DC power supply when the voltage VDCL exceeds the set voltage. Thus, the voltage boosted in the step-up chopper circuit is clamped to the set voltage, thereby preventing the generation of the excessive voltage.

The set voltage is defined by the regeneration input voltage Vin in the regeneration unit 30. When the reactor voltage VDCL in the DC reactor 21 does not exceed the regeneration input voltage Vin in the regeneration unit 30, the regeneration unit 30 does not regenerate the voltage, and when the reactor voltage VDCL exceeds the regeneration input voltage Vin in the regeneration unit 30, the regeneration unit 30 regenerates an exceeded component (VDCL-Vin) to the DC power supply. The regeneration input voltage Vin in the regeneration unit 30, which is the set voltage for defining a regeneration operation, can be set on the basis of a DC voltage VAB of the DC power supply and an operation of the regeneration unit.

According to one configuration example, the regeneration unit 30 comprises a capacitor connected in parallel to the reactor voltage of the pulsing unit 20, an inverter circuit that conducts orthogonal transformation on a capacitor voltage across the capacitor, a transformer that transforms an AC voltage in the invertor circuit, and a rectifier that rectifies the AC voltage of the transformer, the rectifier having its output end connected to the DC power supply.

A transformer ratio of the transformer defines a voltage ratio between the voltage across the capacitor and the voltage of the DC power supply. Since the capacitor voltage in the regeneration unit 30 is defined depending on the voltage of the DC power supply and the transformer ratio of the transformer, the regeneration unit 30 utilizes the capacitor voltage as the set voltage of the regeneration input voltage Vin to perform start and stop of the regeneration operation. The set voltage is dependent on the voltage of the DC power supply and the transformer ratio of the transformer, thereby enabling to vary the transformer ratio of the transformer to change the set voltage. The change in the set voltage can change the clamp voltage in the step-up chopper circuit while changing an operating voltage of the regeneration operation.

In the step-up chopper circuit, the DC reactor 21 is connected between the DC power supply and a source S of the switching element 22 of the step-up chopper circuit. The source S of the switching element 22 of the step-up chopper circuit is connected to a load-side end of the DC reactor 21 or a tap of the DC reactor 21. FIG. 1(a) shows a configuration in which a load-side end of the non-tapped autotransformer is connected to the source S of the switching element 22, and FIG. 1(b) shows a configuration in which the source S of the switching element 22 is connected to a tap of the tapped autotransformer.

### (Forms of Connection between Regeneration Unit and DC Reactor)

The connection between the regeneration unit and the DC rector of the pulsing unit may take various forms. A first form uses the non-tapped autotransformer as DC reactor to connect one terminal of the regeneration unit to the load of the DC reactor 21, while connecting the other terminal to the DC power source (configuration example in FIG. 1(a)). A second form uses the tapped autotransformer as DC reactor to connect one terminal of the regeneration unit to a connection point C between a first DC reactor 21a and a second DC reactor 21b, while connecting the other terminal to the DC power supply (configuration example in FIG. 1(b)).

In the first form, as shown in FIG. 1(a), the source S of the switching element 22 of the step-up chopper circuit is connected to the end of the load of the DC reactor 21. In this form, entire reactor voltage in the DC reactor 21 is input to the regeneration unit 30, so as to perform the regeneration operation based on a comparison with the set voltage in the regeneration unit 30.

In the second form, as shown in FIG. 1(b), the DC reactor 21 comprises a series circuit composed of the first DC reactor 21a and the second DC reactor 21b magnetically-coupled to each other, and the source S of the switching element 22 of the step-up chopper circuit is connected to a tap of the series circuit composed of the first DC reactor 21a and the second DC reactor 21b. In the illustrative form, a reactor voltage in the first DC reactor 21a of the DC reactor 21 is input to the regeneration unit 30 to thereby carrying out the regeneration operation based on the comparison with the set voltage in the regeneration unit 30.

In the step-up chopper circuit having the configuration shown in FIG. 1(b), the DC reactor 21 is composed of the first DC reactor 21a and the second DC reactor 21b magnetically coupled to each other, and one end of the first DC reactor 21a is connected to an input terminal of the DC power supply, whereas one end of the second DC reactor 21b is connected to an output terminal of the pulsing unit 20. A connection point C between the first DC reactor 21a and the second DC reactor 21b is connected to the source S of the switching element 22 of the step-up chopper circuit. To the regeneration unit 30, the voltage across the first DC reactor 21a is input as reactor voltage.

### (Form of DC Reactor)

The DC reactor of the invention can take the first form in which the DC reactor is arranged on the low-voltage side of the pulsing unit and the second form in which the DC reactor is arranged on the high-voltage side of the pulsing unit. In both of the first and second forms, the high-voltage side of the DC reactor is connected to the high-voltage side of the regeneration unit, and the low-voltage side of the DC reactor is connected to the low-voltage side of the regeneration unit. The reactor voltage of the DC reactor 21 is input to the regeneration unit as a regeneration input voltage based on a voltage on the low-voltage side of the DC power supply. In here, FIGS. 1(a) and 1(b) show the first form for arranging the DC reactor on the low-voltage side of the pulsing unit.

The reactor 21 may be in the form of non-tapped autotransformer, or may have two DC reactors to be composed of the tapped autotransformers or multi-winding transformers.

### Effects of the Invention

As described above, in accordance with the present invention, the DC pulse power supply device can suppress the excessive rise in the voltage in the step-up chopper circuit, as well as achieving the high efficiency of the power supply.

### Brief Description of the Drawings

FIG. 1 illustrates a configuration example of a step-up chopper circuit of a DC pulse power supply device according to the invention;
FIG. 2 illustrates a first configuration example of the DC pulse power supply device according to the invention;
FIG. 3 illustrates a state of a voltage in the first configuration example of the DC pulse power supply device according to the invention;
FIG. 4 illustrates an output voltage Vo in a state of regeneration in the DC pulse power supply device according to the invention;
FIG. 5 illustrates a configuration example of a regeneration unit of the DC pulse power supply device according to the invention;
FIG. 6 illustrates a second configuration example of the DC pulse power supply device according to the invention;
FIG. 7 illustrates a third configuration example of the DC pulse power supply device according to the invention;
FIG. 8 illustrates a fourth configuration example of the DC pulse power supply device according to the invention;
FIG. 9 illustrate a fifth configuration example of the DC pulse power supply device according to the invention; and
FIG. 10 illustrates configuration examples of a conventional DC pulse power supply device and a conventional step-up chopper circuit.

### Best Mode for Carrying Out the Invention

A DC pulse power supply device of the present invention regenerates a reactor voltage in a DC reactor of a step-up chopper circuit to a DC power supply, in order to (1) clamp a voltage of the step-up chopper circuit and suppress an excessive rise in the voltage, and (2) achieve high efficiency of the electric power supply by regenerating the excessively raised voltage to the DC power supply.

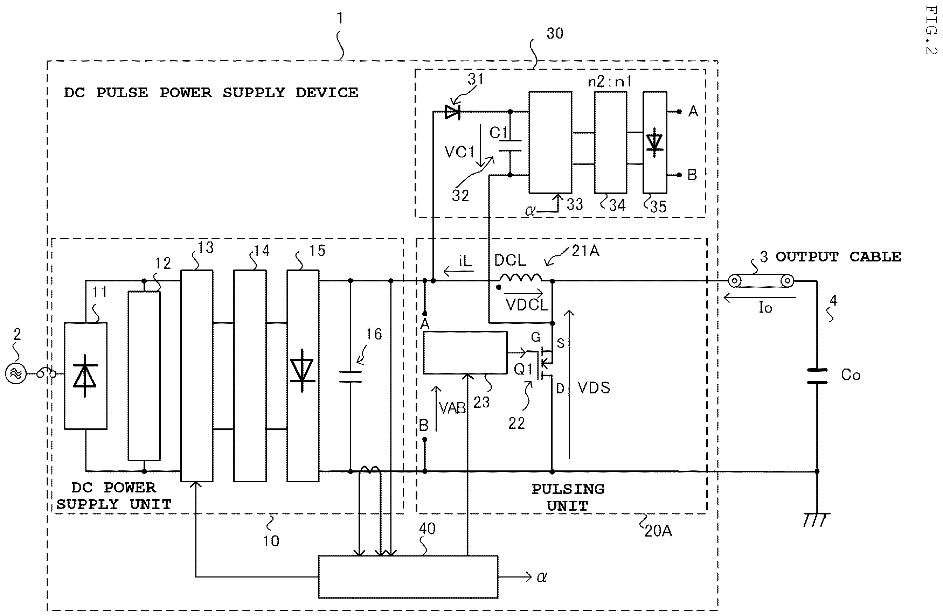

Now, a description will be made on the DC pulse power supply device of the invention by referring to first to fifth configuration examples and FIGS. 2 to 9.

The first configuration example is for regenerating the reactor voltage across the DC reactor of the step-up chopper circuit, and the second to fifth configuration examples are for regenerating the reactor voltage of one of two DC reactors which are magnetically coupled in the step-up chopper circuit. The second and fifth configuration examples use magnetically coupled two DC reactors as tapped autotransformers, and the third and fourth configuration examples use magnetically coupled two DC reactors as multi-winding transformers.

Furthermore, in regard to the reactor voltage to be regenerated, the first to fifth configuration examples use the voltage on the low-voltage side in the DC power supply as reference voltage.

### (First Configuration Example of DC pulse Power Supply Device)

A description will be made about the first configuration example of the DC pulse power supply device of the invention and a state of the voltage by referring to FIGS. 2, 3 and 4.

The DC pulse power supply device of the invention comprises a DC power supply unit (DC unit) 10, a pulsing unit 20A that supplies a pulse output generated by the step-up chopper circuit connected to the DC power supply unit 10 to a load 4, a regeneration unit 30 that regenerates an excessively-risen component of a voltage produced in the pulsing unit 20A, and a control circuit 40 that controls the DC power supply unit 10, the pulsing unit 20A and the regeneration unit 30, in which device the pulse output is supplied to the load 4 through an output cable 3. FIG. 2 shows an example for using a plasma generation device as the load 4, but the load 4 is not limited thereto, and thus an excitation of a pulse laser, an electrical discharge machine or similar may be employed.

### (DC Power Supply)

The DC power supply unit (DC unit) 10 comprises a rectifier 11 that rectifies an AC voltage of an AC power supply 2 into a DC voltage, a snubber circuit 12 that absorbs and suppresses a high voltage spike transiently generated during rectification, a single-phase inverter circuit 13 that changes the DC voltage into an AC voltage, a single-phase transformer 14 that transforms the AC voltage in the single-phase inverter circuit 13 to a prescribed voltage value, a rectifier 15 that rectifies the AC voltage transformed by the single-phase transformer 14 to a DC voltage, and a capacitor (CF) 16 that stores a both-end voltage of which is as a DC voltage of the DC power supply unit. One end of the capacitor 16 is grounded, and a negative low- voltage is produced at the other end thereof. The configuration in FIG. 2 shows a capacitive load of the plasma generation device as an example of the load 4. In this configuration, as one end of the plasma generation device is grounded to supply the negative voltage, the DC power supply unit 10 is configured to generate a puled output of the negative voltage.

The single-phase inverter circuit 13 performs a switching operation in response to a control signal sent from the control circuit 40, so as to change the DC voltage into an AC voltage with a predefined frequency. Each circuit element of the rectifiers 11, 15, the snubber circuit 12, the single-phase inverter circuit 13 and the single-phase transformer 14, which compose the DC power supply unit 10, may be any circuitry that is commonly known.

### (Pulsing unit)

The pulsing unit 20A creates a pulse waveform from the DC voltage by the step-up chopper circuit. The step-up chopper circuit comprises a DC reactor 21A connected in series between the DC power supply and the load, a switching element (Q1) 22 connected in parallel to the load, and a drive circuit 23 for controlling an ON/OFF operation of the switching element 22. The pulsing unit 20A is provided on its DC power supply side with a grounded terminal B and a terminal A of negative voltage as low-voltage side. The illustrated switching element 22 is an example of FET, in which a source S is connected to the low-voltage side and a drain D is connected to a grounded-voltage side, thereby inputting a drive signal from the drive circuit 23 to a gate G.

The control circuit 40 produces a signal for setting a time width or duty ratio between an ON period and an OFF period of the switching element 22 with respect to a target pulse output in order to activate the step-up chopper circuit, as well as producing a control signal based on a voltage and current at the output end of the DC power supply unit 10.

The drive circuit 23 outputs the drive signal based on the control signal from the control circuit 40 to the gate G of the switching element 22, thereby making the switching element 22 to perform the ON/OFF operation.

The source S of the switching element 22 is connected to the load side of the DC reactor 21A, and the drain D of the switching element 22 is grounded. When the switching element 22 is ON, the load side of the DC reactor 21A is grounded, and thereby a current flows from the terminal B to terminal A through the switching element 22 in the ON state and the DC reactor 21A. At that time, electromagnetic energy is accumulated in the DC reactor 21A. Then, when the switching element 22 is turned from the ON state to the OFF state, a reactor voltage VDCL is generated in the DC reactor 21A by the accumulated energy in the DC reactor 21A. By repeating the ON and OFF operation of the switching element 22, the step-up chopper circuit can boost an output voltage Vo according to the duty ratio of the time widths of the ON and OFF periods.

### (Regeneration Unit)

The regeneration unit 30 regenerates to the DC power supply a component of the reactor voltage in the DC reactor of the step-up chopper circuit that exceeds the set voltage. The regeneration unit 30 comprises a diode 31, a capacitor (C1) 32, an inverter circuit 33, a transformer 34 and a rectifier 35.

One end of the capacitor (C1) 32 is connected to an end of the load of the DC reactor 21A, and the other end is connected to an end of the DC power supply of the DC reactor 21A via the diode 31, so that the reactor voltage generated in the DC reactor 21A is applied. A capacitor voltage VC1 of the capacitor (C1) 32 is defined on the basis of a DC voltage VAB of the DC power supply and a transformer ratio of the transformer, and when the transformer ratio of the transformer 34 is (n2:n1), the set voltage is VC1=(n2/n1)xVAB. The diode 31 is connected in such a way that a direction from the pulsing unit 20A toward the capacitor (C1) 32 of the regeneration unit 30 is to be forward direction, and when the reactor voltage VDCL of the DC reactor 21A exceeds the capacitor voltage VC1 of the capacitor (C1) 32, the regeneration unit 30 regenerates a component of the reactor voltage VDCL that exceeds the capacitor voltage VC1 of the capacitor (C1) 32. Thus, the regeneration unit 30 performs the regeneration operation by using the capacitor voltage VC1 of the capacitor (C1) 32 as threshold. The capacitor voltage VC1 corresponds to the regeneration input voltage Vin in FIG. 1.

As to a method for defining the capacitor voltage VC1, there is a solution to vary the transformer ratio of the transformer 34 as well as controlling the output of the inverter circuit 33. Such solution can be, for example, PWM control or phase-shift control, but is not limited thereto and any solution that controls the output of the inverter circuit may be adopted.

Furthermore, in the circuitry shown in FIG. 2, the regeneration unit 30 is configured such that one end of the regeneration unit is connected to a low-voltage input end of the pulsing unit 20A, so as to regenerate the reactor voltage VDCL of the DC reactor 21A as the regeneration input voltage Vin based on a voltage on the low-voltage side (negative voltage).

The inverter circuit 33 performs orthogonal transform between the DC voltage in the capacitor 32 and the AC voltage in the transformer 34, to thereby keep the capacitor voltage VC1 of the capacitor (C1) 32 to a constant voltage level based on the DC voltage VAB of the DC power supply, and when the reactor voltage VDCL exceeds the capacitor voltage VC1 of the capacitor (C1) 32, change the exceeded voltage component into an AC voltage to regenerate it to the DC power supply. Since the capacitor voltage VC1 is held to the constant voltage level, the reactor voltage VDCL in the DC reactor 21A is clamped to the capacitor voltage VC1. The inverter circuit 33 can be configured with a bridge circuit of the switching element, by way of example. The switching element is open and closed by the control in response to a control signal α from the control circuit 40.

The transformer 34 modulates a voltage ratio between the DC voltage VAB of the DC power supply unit 10 and the capacitor voltage VC1 of the capacitor (C1) 32 based on the transformer ratio. When the transformer ratio of the transformer 34 is (n2:n1), the relationship of the voltages between the DC voltage VAB and the capacitor voltage VC1 can be expressed by VC1=(n2/n1)xVAB.

The rectifier 35 rectifies the AC voltage in the transformer 34 to the DC voltage in the DC power supply unit 10. The terminal on the DC side of the rectifier 35 is connected to the terminals A, B of the DC power supply unit 10, so that electric power is regenerated to the DC power supply unit 10 only when the capacitor voltage VC1 exceeds a voltage based on the DC voltage VAB.

The configuration of the regeneration unit 30 is not limited to the above-described one if the configuration includes a function of clamping the voltage across the DC reactor 21A to a predefined voltage and a function of regenerating a component of electric power exceeding the predefined voltage to the DC power supply.

### (States of Voltage in DC Pulse Power Supply Unit)

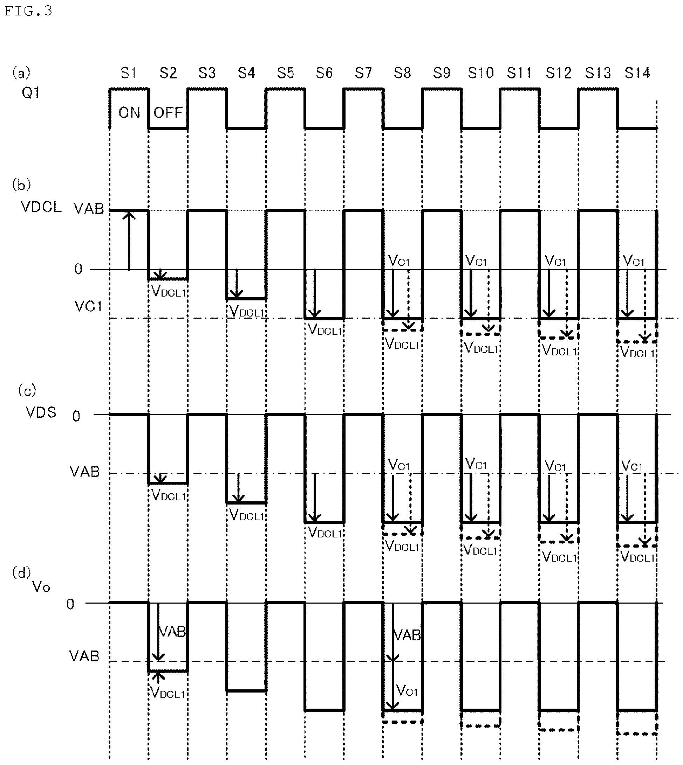

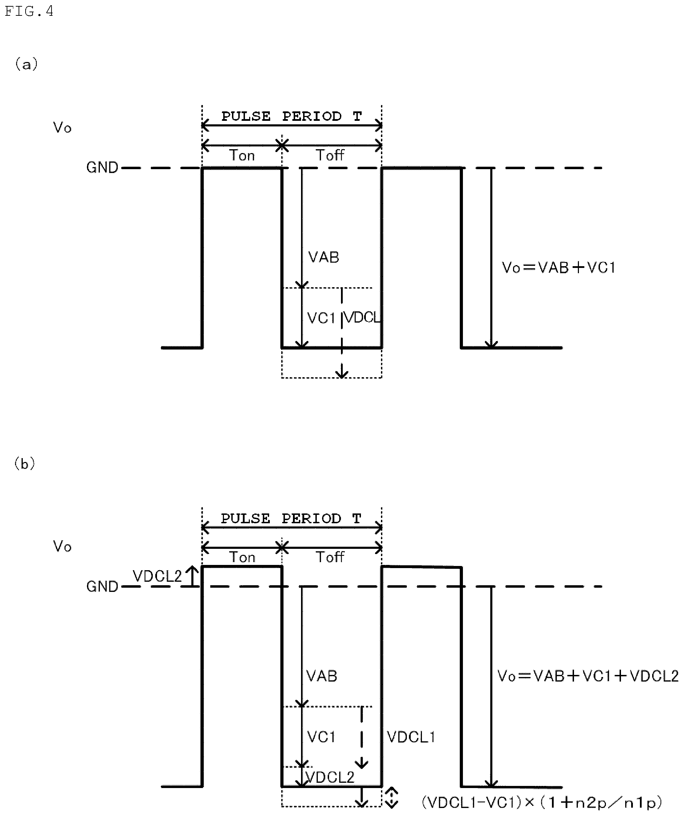

The states of the voltage of the DC pulse power supply device will be described by referring to FIGS. 3 and 4. In FIG. 3, FIG. 3(a) shows an ON state and an OFF state of the switching element (Q1) 22, FIG. 3(b) shows the reactor voltage VDCL of the DC reactor 21A, FIG. 3(c) shows a drain-source voltage VDS of the switching element 22, and FIG. 3(d) shows the output voltage Vo.

In the following, referential numerals S1 to S14 represent the ON state and the OFF state in each phase. The odd numerals S1, S3 ... S13 represent the ON state of the switching element 22, and the even numerals S2, S4 ... S14 represent the OFF state of the switching element 22.

### (i) ON state (S1, S3 ... S13)

The switching element 22 is in the ON state (FIG. 3(a)), in which state the terminal on the negative side of the DC reactor 21A is grounded, so that the drain-source voltage VDS in the switching element 22 stands at zero (FIG. 3(c)) and the reactor voltage VDCL in the DC reactor 21A becomes the DC voltage VAB of the DC power supply (FIG. 3(b)). Furthermore, the output voltage Vo is 0V (FIG. 3(d)).

### (ii) OFF state (S2, S4 ... S14)

Concerning the OFF state, a description will be made about the reactor voltage VDCL in a state before reaching the capacitor voltage VC1 as a threshold for regeneration (S2, S4, S6) and a state after reaching the capacitor voltage VC1 (S8, S10, S12, S14).

### (ii-1) States of S2, S4, S6

The switching element 22 is in the OFF state (FIG. 3(a)), and the reactor voltage VDCL is generated in the DC reactor 21A by the discharge of the accumulated energy. The voltage value of the reactor voltage VDCL increases every time the state changes from ON to OFF. In this voltage rise, the reactor voltage VDCL does not reach the capacitor voltage VC1 of the regeneration unit, so that no regeneration is performed. FIG. 3 shows a state where the voltage value on the negative side increases (FIG. 3(b)).

The drain-source voltage VDS of the switching element 22 is rendered to be a voltage corresponding to the reactor voltage VDCL and increases gradually, but does not reach the capacitor voltage VC1 of the regeneration unit. In here, FIG. 3 shows a state where the voltage value on the negative side increases (FIG. 3(c)). As the output voltage Vo, a voltage obtained by adding the reactor voltage VDCL to the DC voltage VAB of the DC power supply is output (FIG. 3(d)).

### (ii-2) States of S8, S10, S12, S14

As with the cases of S2, S4, S6, the switching element 22 is in the OFF state (FIG. 3(a)), and the reactor voltage VDCL is generated in the DC reactor 21A by the discharge of the accumulated voltage. In the states of S8, S10, S12 and S14, the voltage value of the reactor voltage VDCL reaches the capacitor voltage VC1, so that the voltage value of the reactor voltage VDCL is clamped to the capacitor voltage VC1 to prevent the voltage from increasing any further. FIG. 3(b) shows a state where the reactor voltage VDCL depicted with a solid line is clamped to the capacitor voltage VC1, and also a case, as a comparative example, where the reactor voltage VDCL depicted with a broken line is not clamped to the capacitor voltage VC1.

The drain-source voltage VDS of the switching element 22 is rendered to be a voltage corresponding to the reactor voltage VDCL, and is held to the voltage of the capacitor voltage VC1 of the regeneration unit. FIG. 3(c) shows a state where the drain-source voltage VDS depicted with a solid line is clamped to the capacitor voltage VC1, and also a case, as a comparative example, where the drain-source voltage VDS depicted with a broken line is not clamped to the capacitor voltage VC1. In here, FIG. 3 shows a state where the voltage value on the negative side increases (FIG. 3(c)).

As the output voltage Vo, output is a voltage obtained by adding the reactor voltage VDCL to the DC voltage VAB of the DC power supply. Since the reactor voltage VDCL is clamped, the output voltage Vo is held to be constant (FIG. 3(d)).

FIG. 4(a) shows a first configuration example, in which the output voltage Vo in a state of regeneration. The DC pulse power supply device outputs a pulse output of the output voltage Vo with a period of switching the step-up chopper circuit as a pulse period T. The pulse output has, during the pulse period T, an ON period Ton in which the switching element is in the ON state and an OFF period Toff in which the switching element is in the OFF state. The value of the output voltage Vo during the ON period Ton corresponds to the drain-source voltage VDS.

By contrast, the output voltage Vo during the OFF period Toff is obtained by superimposing the reactor voltage VDCL on the DC voltage VAB of the DC power supply, namely (VAB+VDCL). However, since the reactor voltage VDCL is clamped to the capacitor voltage VC1, the output voltage stands at (VAB+VC1). As the DC voltage VAB and the capacitor voltage VC1 are held constant, the output voltage Vo of the pulse output is held constant. In FIG. 4(a), the parts indicated by a dashed line represent voltages (VDCL-VC1) suppressed by deducting the clamped capacitor voltage VC1 from the reactor voltage VDCL.

### (Configuration Example of Regeneration Unit)

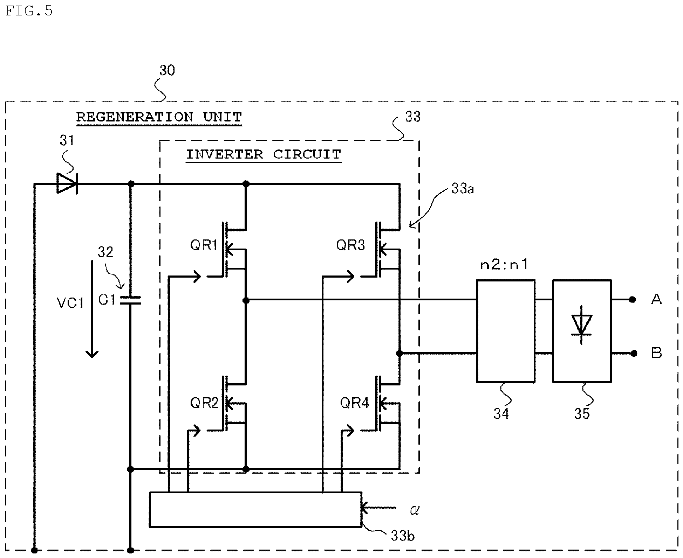

Referring to FIG. 5, a description will be made about the inverter circuit included in the regeneration unit of the DC pulse power supply device.

The regeneration unit 30 includes the inverter circuit 33 that outputs to the transformer 34 an AC voltage obtained by performing orthogonal transformation on the DC voltage of the capacitor voltage VC1 in the capacitor (C1) 32. The inverter circuit 33 comprises a bridge circuit 33a consisting of switching elements QR1 to QR4, and a drive circuit 33b that generates a drive signal for driving the switching elements QR1 to QR4 based on a control signal α. In here, a full-bridge circuit is used as an example of the bridge circuit 33a, but the circuit 33a may be a half-bridge circuit or multi-phase inverter circuit.

### (Second Configuration of DC Pulse Power Supply Device)

A second configuration of the DC pulse power supply device of the present invention comprises, as with the first configuration, the DC power supply unit (DC unit) 10, a pulsing unit 20B that supplies to the load 4 with a pulse output generated by the step-up chopper circuit connected to the DC power supply unit 10, the regeneration unit 30 that regenerates a component of a voltage that rose excessively in the pulsing unit 20B to the DC power supply unit 10, and the control circuit 40 that controls the DC power supply unit 10, the pulsing unit 20B and the regeneration unit 30, the power supply device supplying the pulse output through an output cable 3 to the load 4.

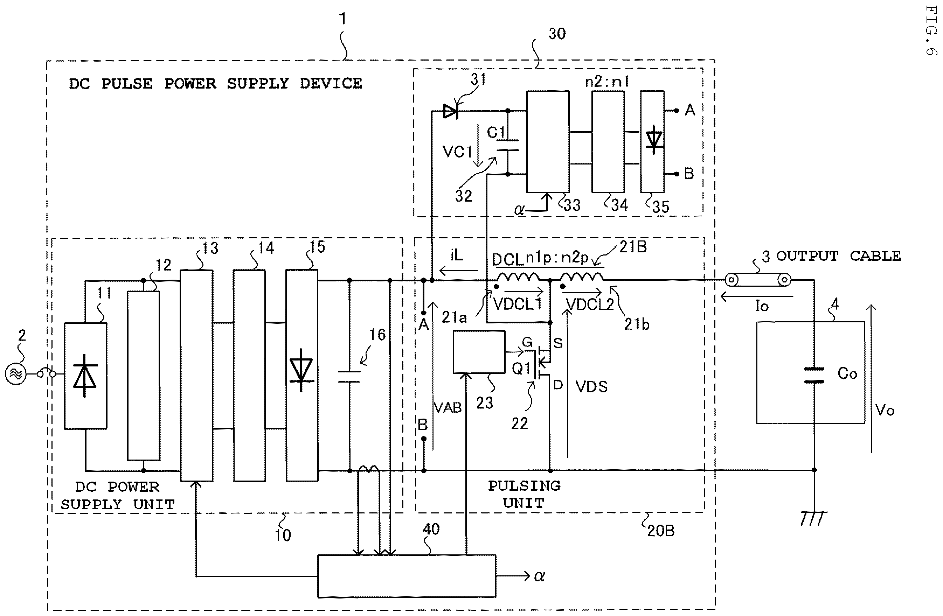

The second configuration example of the DC pulse power supply device of the invention will be described by referring to FIG. 6. The second configuration example is different from the first configuration example in the step-up chopper circuit in the pulsing unit 20, and is the same as the first configuration example in the other constituent elements. Next, a description will be made about the constituent element that differs from that of the first configuration example, and the description about the other common elements will be omitted.

The DC reactor 21A included in the step-up chopper circuit of the first configuration example is composed of a single coil. By contrast, the DC reactor 21B of the second configuration example is composed of a tapped autotransformer, instead of the single coil of the step-up chopper circuit of the first configuration example. The DC reactor 21B of the tapped autotransformer can be configured by connecting the magnetically coupled first DC reactor 21a and second DC reactor 21b in series, and a connection point between the first DC reactor 21a and the second DC reactor 21b is used as a tapping point. One end of the first DC reactor 21a is connected to the terminal A on the low-voltage side of the DC power supply, whereas one end of the second DC reactor 21b is connected to the load side, and the tapping point of the connection point between the first DC reactor 21a and the second DC reactor 21b is connected to the source S in the switching element 22.

When the switching element 22 is in the ON state, the tapping point of the connection point of the DC reactor 21B is grounded, thereby flowing a current from the terminal B to the terminal A via the switching element 22 in the ON state and the first DC reactor 21a of the DC reactor 21B. At this time, electromagnetic energy is accumulated in the first DC reactor 21a.

Then, when the switching element 22 is turned from the ON state to the OFF state, a reactor current iL flown by the accumulated energy in the first DC reactor 21a of the DC reactor 21B causes the generation of a reactor voltage VDCL1 in the first DC reactor 21a and a reactor voltage VDCL2 in the second DC reactor 21b. The step-up chopper circuit repeatedly changes the ON state and the OFF state of the switching element 22, so as to boost the output voltage Vo as with the case of the first configuration example.

The voltage ratio between the reactor voltage VDCL1 of the first DC reactor 21a and the reactor voltage VDCL2 of the second DC reactor 21b corresponds to an inductance ratio between the first DC reactor 21a and the second DC reactor 21b. When a turns ratio of the tapped single-turning coils of the first DC reactor 21a and second DC reactor 21b of the DC reactor 21B is nlp:n2p, the voltage ratio (VDCL1/VDCL2) between the reactor voltage VDCL1 of the first DC reactor 21a and the reactor voltage VDCL2 of the second DC reactor 21b stands at the turns ratio of (n1p/n2p).

The regeneration unit 30 in the second configuration example works in the same way as that of the first configuration example by applying the reactor voltage VDCL1 of the first DC reactor 21a of the DC reactor 21B, instead of the reactor voltage VDCL of the DC reactor 21A in the first configuration example.

In the regeneration unit 30, one end of the capacitor (C1) 32 is connected to the connection point between the first DC reactor 21a and second DC reactor 21b of the DC reactor 21B, whereas the other end thereof is connected to the end part of the DC power supply in first the DC reactor 21a via the diode 31, thereby applying the reactor voltage VDCL1 generated in the first DC reactor 21a. The voltage VC1 of the capacitor (C1) 32 is defined on the basis of the DC voltage VAB of the DC power supply and the transformer ratio of the transformer 34, and when the transformer ratio of the transformer 34 is (n2:n1), the voltage VC1 is a set voltage of VC1=(n2/n1)xVAB. The diode 31 is connected such that a direction from the pulsing unit 20B toward the capacitor (C1) 32 of the regeneration unit 30 is a forward direction, and when the reactor voltage VDCL1 in the first DC reactor 21a exceeds the capacitor voltage VC1 in the capacitor (C1) 32, the regeneration unit 30 regenerates a component of the reactor voltage VDCL1 that exceeds the capacitor voltage VC1 of the capacitor (C1) 32. In this way, the regeneration unit 30 performs the regeneration operation by using the capacitor voltage VC1 in the capacitor (C1) 32 as a threshold, as with the case of the first configuration example.

As the output voltage Vo, output is a voltage (Vo=VAB+VDCL1+VDCL2) obtained by superimposing the reactor voltage VDCL1 of the first DC reactor 21a and the reactor voltage VDCL2 of the second DC reactor 21b on the DC voltage VAB of the DC power supply. Since the reactor voltage VDCL1 of the first DC reactor 21a is clamped to the capacitor voltage VC1, the output voltage Vo stands at Vo=VAB+VC1+VDCL2.

FIG. 4(b) shows the output voltage Vo in the state of regeneration in the second configuration example. The DC pulse power supply device outputs the pulse output of the output voltage Vo with a period of switching the step-up chopper circuit as a pulse period T. The pulse output has, during the pulse period T, an ON period Ton in which the switching element is in the ON state and an OFF period Toff in which the switching element is in the OFF state. The value of the output voltage Vo during the ON period Ton corresponds to the reactor voltage VDCL2.

By contrast, the output voltage Vo during the OFF period Toff is obtained by superimposing the reactor voltage VDCL1 of the first DC reactor 21a and the reactor voltage VDCL2 of the second DC reactor 21b on the DC voltage VAB of the DC power supply, namely (VAB+VDCL1+VDCL2). However, the reactor voltage VDCL1 is clamped to the capacitor voltage VC1, so that the output voltage Vo stands at (VAB+VC1+VDCL2). Since the DC voltage VAB and the capacitor voltage VC1 are constant, the output voltage Vo of the pulse output is held near constant.

In FIG. 4(b), the parts indicated by a dashed line represent suppressed voltages. Since the regenerated capacitor voltage VC1 is clamped, the voltage VDCL1 to be applied to the source of the switching element changes into the voltage VC1, and thereby a voltage of (VDCL1-VC1) is suppressed. Furthermore, since the reactor voltage VDCL1 is suppressed, a component (VDCL1-VC1)x(n2p/nlp) of the reactor voltage VDCL2 generated in the second DC reactor 21b is also suppressed according to a turns ratio. Thus, a clamped component of the output voltage is (VDCL1-VC1)x(1+n2p/n1p).

### (Third Configuration of DC Pulse Power Supply Device)

A third configuration of the DC pulse power supply device of the present invention also comprises, as with the first and second configurations, the DC power supply unit (DC unit) 10, a pulsing unit 20C that supplies to the load 4 with a pulse output generated by the step-up chopper circuit connected to the DC power supply unit 10, the regeneration unit 30 that regenerates a component of the voltage that rises excessively in the pulsing unit 20C to the DC power supply unit 10, and the control circuit 40 that controls the DC power supply unit 10, the pulsing unit 20C and the regeneration unit 30, the power supply device supplying the pulse output through the output cable 3 to the load 4.

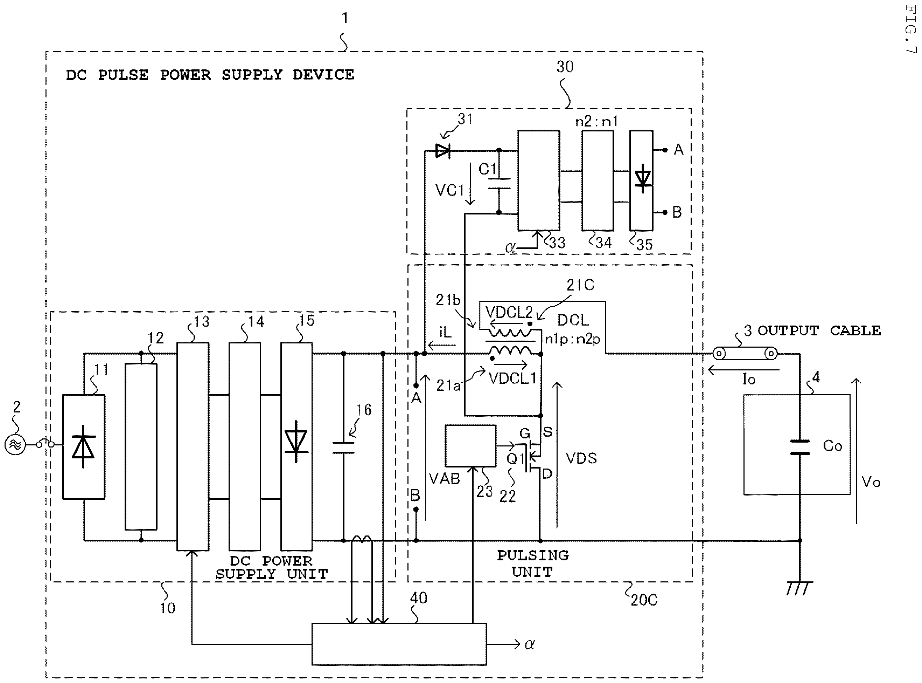

A description will now be made about the third configuration example of the DC pulse power supply device of the invention by referring to FIG. 7. The third configuration example is different from the first and second configuration examples in the step-up chopper circuit in the pulsing unit 20C, and is the same as the first and second configuration examples in the other constituent elements. Next, a description will be made about the constituent element that differs from those of the first and second configuration examples, and the description about the other common elements will be omitted.

The DC reactor 21B included in the step-up chopper circuit of the second configuration example is composed of a tapped autotransformer. By contrast, the DC reactor 21C of the third configuration example is composed of a multi-winding transformer, instead of the tapped autotransformer of the step-up chopper circuit of the second configuration example. The multi-winding transformer of the DC reactor 21C is an example of an additive polarity transformer.

The DC reactor 21C of the multi-winding transformer is configured by connecting the magnetically coupled first DC reactor 21a and second DC reactor 21b in parallel. One end of the first DC reactor 21a is connected to the terminal A on the low-voltage side of the DC power supply, and the other end thereof is connected to the end of the source S of the switching element 22. One end of the second DC reactor 21b is connected to the end of the source S of the switching element 22, and the other end is connected to the load side.

When the switching element 22 is in the ON state, the end of the switching element 22 of the first DC reactor 21a of the DC reactor 21C is grounded, so that a current flows from the terminal B to the terminal A through the switching element 22 in the ON state and the first DC reactor 21a. At this time, electromagnetic energy is accumulated in the first DC reactor 21a.

Then, when the switching element 22 is turned from the ON state to the OFF state, a reactor current iL flown by the accumulated energy in the first DC reactor 21a of the DC reactor 21C causes the generation of the reactor voltage VDCL1 in the first DC reactor 21a, and the electromagnetic coupling of the second DC reactor 21b with the first DC reactor 21a causes the generation of the reactor voltage VDCL2 in the second DC reactor 21b. The step-up chopper circuit repeatedly changes the ON state and the OFF state of the switching element 22, so as to boost the output voltage Vo as with the case of the first and second configuration examples.

A voltage ratio between the reactor voltage VDCL1 of the first DC reactor 21a and the reactor voltage VDCL2 of the second DC reactor 21b stands at a value corresponding to an inductance ratio between the first DC reactor 21a and the second DC reactor 21b. When a turns ratio of the multi-turning coils of the first DC reactor 21a and second DC reactor 21b of the DC reactor 21C is (nlp:n2p), the voltage ratio (VDCL1/VDCL2) between the reactor voltage VDCL1 of the first DC reactor 21a and the reactor voltage VDCL2 of the second DC reactor 21b stands at the turns ratio of (nlp/n2p).

The regeneration unit of the third configuration example acts in the way similar to the case in the regeneration unit for the reactor voltage VDCL1 of the first DC reactor 21a of the DC reactor 21B of the second configuration example.

In the regeneration unit 30, one end of the capacitor (C1) 32 is connected to an end of the switching element of the first DC reactor 21a of the DC reactor 21C and the other end is connected to an end of the DC power supply of the first DC reactor 21a via the diode 31, so as to apply the reactor voltage VDCL1 generated in the first DC reactor 21a. The capacitor voltage VC1 in the capacitor (C1) 32 is defined on the basis of the DC voltage VAB of the DC power supply and the transformer ratio of the transformer, and when the transformer ratio of the transformer 34 is (n2:n1), a set voltage is VC1=(n2/n1)xVAB. The diode 31 is connected such that a direction from the pulsing unit toward the capacitor (C1) 32 of the regeneration unit 30 is a forward direction, and when the reactor voltage VDCL1 of the first DC reactor 21a exceeds the capacitor voltage VC1 of the capacitor (C1) 32, the regeneration unit 30 regenerates a component of the reactor voltage VDCL1 that exceeds the capacitor voltage VC1 of the capacitor (C1) 32. In this way, the regeneration unit 30 performs the regeneration operation by using the capacitor voltage VC1 of the capacitor (C1) 32 as threshold, as with the cases of the first and second configuration examples.

As to the output voltage Vo, output is a voltage (Vo=VAB+VDCL1+VDCL2) obtained by superimposing the reactor voltage VDCL1 of the first DC reactor 21a and the reactor voltage VDCL2 of the second DC reactor 21b on the DC voltage VAB of the DC power supply. Since the reactor voltage VDCL1 of the first DC reactor 21a is clamped to the capacitor voltage VC1, the output voltage Vo is Vo=VAB+VC1+VDCL2. When a turns ratio of the first DC reactor 21a and the second DC reactor 21b is (nlp/n2p), the reactor voltage VDCL1 and the reactor voltage VDCL2 is expressed by (VDCL1/VDCL2=n1p/n2p).

### (Fourth Configuration of DC Pulse Power Supply Device)

A fourth configuration of the DC pulse power supply device of the present invention comprises, as with the first, second and third configurations, the DC power supply unit (DC unit) 10, the pulsing unit 20C that generates a pulse output by using the step-up chopper circuit connected to the DC power supply unit 10 so as to supply the generated output to the load 4, the regeneration unit 30 that regenerates a component of the voltage that rises excessively in the pulsing unit 20C to the DC power supply unit 10, and the control circuit 40 that controls the DC power supply unit 10, the pulsing unit 20C and the regeneration unit 30, the power supply device supplying the pulse output through the output cable 3 to the load 4.

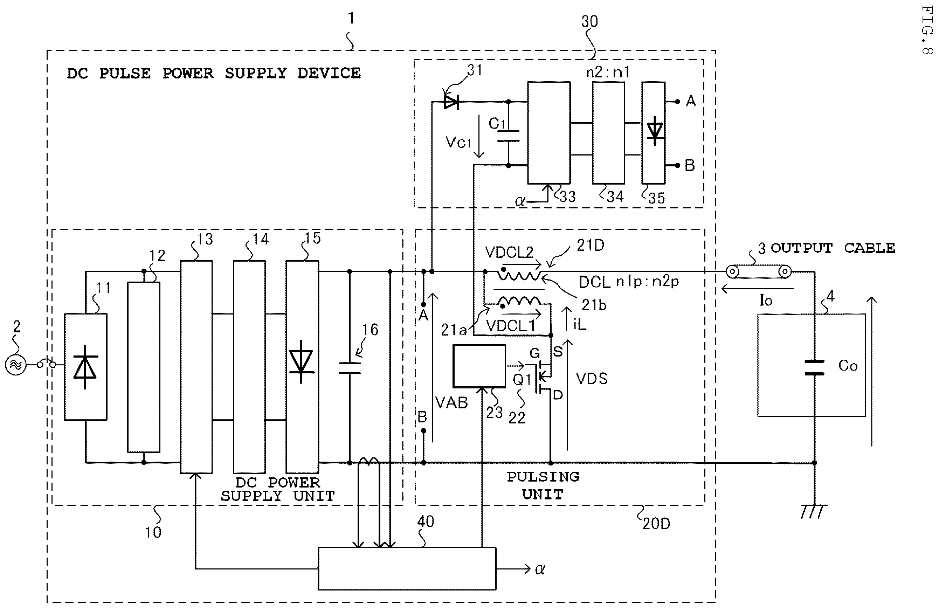

A description will now be made about the fourth configuration example of the DC pulse power supply device of the invention by referring to FIG. 8. The fourth configuration example is different from the third configuration example in the transformer that constitutes the step-up chopper circuit in the pulsing unit 20C, and is the same as the third configuration example in the other constituent elements.

The DC reactor 21C included in the step-up chopper circuit of the third configuration example is composed of the multi-winging transformer with the additive polarity. By contrast, the DC reactor 21D of the fourth configuration example is composed of a multi-winding transformer with a subtractive polarity, instead of the multi-winding transformer with the additive polarity of the step-up chopper circuit of the third configuration example.

The DC reactor 21D of the multi-winding transformer is configured by connecting the magnetically coupled first DC reactor 21a and second DC reactor 21b in parallel. One end of the first DC reactor 21a is connected to the terminal A on the low-voltage side of the DC power supply, and the other end thereof is connected to the source S of the switching element 22. One end of the second DC reactor 21b is connected to the terminal A on the low-voltage side of the DC power supply, and the other end is connected to the load side.

When the switching element 22 is in the ON state, the end of the switching element 22 of the first DC reactor 21a of the DC reactor 21C is grounded, so that a current flows from the terminal B to the terminal A through the switching element 22 in the ON state and the first DC reactor 21a. At this time, electromagnetic energy is accumulated in the first DC reactor 21a.

Then, when the switching element 22 is turned from the ON state to the OFF state, a reactor current iL flown by the accumulated energy in the first DC reactor 21a of the DC reactor 21C causes the generation of the reactor voltage VDCL1 in the first DC reactor 21a, and the electromagnetic coupling of the second DC reactor 21b with the first DC reactor 21a causes the generation of the reactor voltage VDCL2 in the second DC reactor 21b. The step-up chopper circuit repeatedly changes the ON state and the OFF state of the switching element 22, thereby increasing the output voltage Vo as with the case of the first, second and third configuration examples.

A voltage ratio between the reactor voltage VDCL1 of the first DC reactor 21a and the reactor voltage VDCL2 of the second DC reactor 21b stands at a value corresponding to an inductance ratio between the first DC reactor 21a and the second DC reactor 21b. When a turns ratio of the multi-turning coils of the first DC reactor 21a and second DC reactor 21b of the DC reactor 21D is (nlp:n2p), the voltage ratio (VDCL1/VDCL2) between the reactor voltage VDCL1 of the first DC reactor 21a and the reactor voltage VDCL2 of the second DC reactor 21b stands at the turns ratio of (nlp/n2p).

The DC reactor 21D of the regeneration unit of the fourth configuration example acts in the similar manner to the case in the DC reactor 21C of the third configuration example for the reactor voltage VDCL1 of the first DC reactor 21a of the DC reactor 21C.

In the regeneration unit 30, one end of the capacitor (C1) 32 is connected to an end of the switching element of the first DC reactor 21a of the DC reactor 21D and the other end is connected to an end of the DC power supply of the first DC reactor 21a via the diode 31, so as to apply the reactor voltage VDCL 1 generated in the first DC reactor 21a. The capacitor voltage VC1 in the capacitor (C1) 32 is defined on the basis of the DC voltage VAB of the DC power supply and the transformer ratio of the transformer, and when the transformer ratio of the transformer 34 is (n2:n1), a set voltage is VC1=(n2/n1)xVAB. The diode 31 is connected such that a direction from the pulsing unit toward the capacitor (C1) 32 of the regeneration unit 30 is a forward direction, and when the reactor voltage VDCL1 of the first DC reactor 21a exceeds the capacitor voltage VC1 of the capacitor (C1) 32, the regeneration unit 30 regenerates a component of the reactor voltage VDCL1 that exceeds the capacitor voltage VC1 of the capacitor (C1) 32. In this way, the regeneration unit 30 performs the regeneration operation by using the capacitor voltage VC1 of the capacitor (C1) 32 as threshold, as with the cases of the first, second and third configuration examples.

As to the output voltage Vo, output is a voltage (Vo=VAB+VDCL2) obtained by superimposing the reactor voltage VDCL2 of the second DC reactor 21b on the DC voltage VAB of the DC power supply. When a turns ratio between the first DC reactor 21a and second DC reactor 21b is (nlp/n2p), the reactor voltage VDCL1 and the reactor voltage VDCL2 is expressed by (VDCL1/VDCL2=n1p/n2p). Thus, when the voltage VDCL1 is clamped to the voltage VC1, the output voltage Vo is expressed by Vo=VAB+VC1x(n1p/n2p).

### (Fifth Configuration of DC Pulse Power Supply Device)

A fifth configuration of the DC pulse power supply device of the present invention comprises, as with the first configuration, the DC power supply unit (DC unit) 10, the pulsing unit 20B that supplies to the load 4 with a pulse output generated by the step-up chopper circuit connected to the DC power supply unit 10, the regeneration unit 30 that regenerates a component of the voltage that rises excessively in the pulsing unit 20B to the DC power supply unit 10, and the control circuit 40 that controls the DC power supply unit 10, the pulsing unit 20B and the regeneration unit 30, the power supply device supplying the pulse output through the output cable 3 to the load 4.

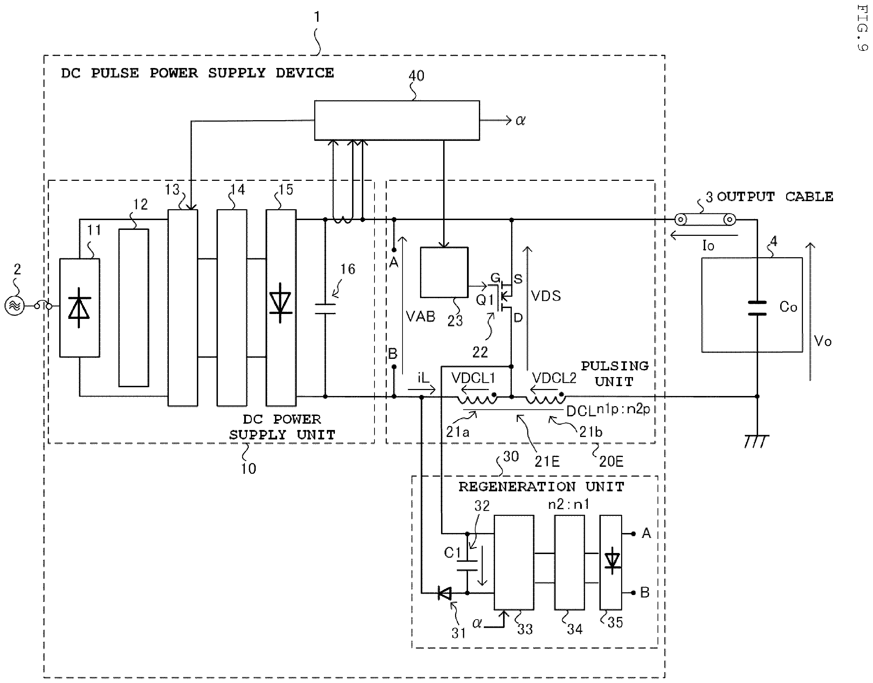

A description will now be made about the fifth configuration example of the DC pulse power supply device of the invention by referring to FIG. 9. The fifth configuration example is different from the second configuration example in the arrangement of the DC reactor of the step-up chopper circuit, and is the same as the second configuration example in the other constituent elements. In the following, the difference from the second configuration example will be described, and the description about the other common elements will be omitted.

A DC reactor 21E included in the step-up chopper circuit of the fifth configuration example is composed of a trapped (sic) autotransformer, as with the DC reactor 21B of the step-up chopper circuit of the second step-up chopper circuit. However, the DC reactor 21E differs in its arrangement with respect to a power line. The DC reactor 21B of the second configuration example is connected to a power line on the low-voltage side of the DC power supply, whereas the DC reactor 21E of the fifth configuration example is connected to a power line on the high-voltage side of the DC power supply.

The DC reactor 21E of the tapped autotransformer is configured by connecting the magnetically coupled first DC reactor 21a and second DC reactor 21b in series, and uses a connection point between the first DC reactor 21a and the second DC reactor 21b as tapping point. One end of the first DC reactor 21a is connected to the terminal B on the high-voltage side of the DC power supply, and one end of the second DC reactor 21b is connected to the load side and further grounded. The tapping point of the connection point of the first DC reactor 21a and the second DC reactor 21b is connected to the end of the drain D of the switching element 22.

When the switching element 22 is in the ON state, the tapping point of the connection point of the DC reactor 21E is grounded via the second DC reactor 21b, so that a current can flow from the terminal B to the terminal A through the first DC reactor 21a and the switching element 22 in the ON state. At this time, electromagnetic energy is accumulated in the first DC reactor 21a.

Then, when the switching element 22 is turned from the ON state to the OFF state, a reactor current iL flown by the accumulated energy in the first DC reactor 21a of the DC reactor 21E causes the generation of the reactor voltage VDCL1 in the first DC reactor 21a, while causing the generation of the reactor voltage VDCL2 in the second DC reactor 21b. The step-up chopper circuit repeatedly changes the ON state and the OFF state of the switching element 22, so as to boost the output voltage Vo as with the case of the first configuration example.

A voltage ratio between the reactor voltage VDCL1 of the first DC reactor 21a and the reactor voltage VDCL2 of the second DC reactor 21b stands at a value corresponding to an inductance ratio between the first DC reactor 21a and the second DC reactor 21b. When a turns ratio of a tapped single-winding coils of the first DC reactor 21a and second DC reactor 21b of the DC reactor 21E is nlp:n2p, the voltage ratio (VDCL1/VDCL2) between the reactor voltage VDCL1 of the first DC reactor 21a and the reactor voltage VDCL2 of the second DC reactor 21b stands at the turns ratio of (nlp/n2p).

The regeneration unit 30 of the fifth configuration example can act in the manner similar to the case in the first configuration example by employing the reactor voltage VDCL1 of the first DC reactor 21a of the DC reactor 21E instead of the reactor voltage VDCL of the DC reactor 21A of the first configuration example.

In the regeneration unit 30, one end of the capacitor (C1) 32 is connected to the connection point between the first DC reactor 21a and second DC reactor 21b of the DC reactor 21E and the other end is connected on the end part of the DC power supply of the first DC reactor 21a via the diode 31, thereby applying the reactor voltage VDCL1 generated in the first DC reactor 21a. The capacitor voltage VC1 of the capacitor (C1) 32 is defined based on the DC voltage VAB of the DC power supply and the transformer ratio of the transformer, and when the transformer ratio of the transformer 34 is (n2:n1), a set voltage is VC1=(n2/n1)xVAB. The diode 31 is connected such that a direction from the pulsing unit 20D toward the capacitor (C1) 32 of the regeneration unit 30 is a reversed direction, and when the reactor voltage VDCL1 of the first DC reactor 21a exceeds the capacitor voltage VC1 of the capacitor (C1) 32, the regeneration unit 30 regenerates a component of the reactor voltage VDCL1 that exceeds the capacitor voltage VC1 of the capacitor (C1) 32. Thus, the regeneration unit 30 performs the regeneration operation by using the capacitor voltage VC1 of the capacitor (C1) 32 as threshold, as with the cases of the first configuration example.

As to the output voltage Vo, output is a voltage (Vo=VAB+VDCL1+VDCL2) obtained by superimposing the reactor voltage VDCL1 of the first DC reactor 21a and the reactor voltage VDCL2 of the second DC reactor 21b on the DC voltage VAB of the DC power supply. Since the voltage VDCL1 of the first DC voltage 21a is clamped to the voltage VC1, the output voltage Vo is expressed by Vo=VAB+VC1+VDCL2.

FIG. 4(b) shows, as with the second configuration example, the output voltage Vo in the regeneration state in the fifth configuration example. The DC pulse power supply device outputs the pulse output of the output voltage Vo with a period of switching the step-up chopper circuit as a pulse period T. The pulse output has, during the pulse period T, an ON period Ton in which the switching element is in the ON state and an OFF period Toff in which the switching element is in the OFF state. The value of the output voltage Vo during the ON period Ton corresponds to the reactor voltage VDCL2.

By contrast, the output voltage Vo in the OFF period Toff is obtained by superimposing the reactor voltage VDCL1 of the first DC reactor 21a and the reactor voltage VDCL2 of the second DC reactor 21b on the DC voltage VAB of the DC power supply, namely (VAB+VDCL1+VDCL2). However, the reactor voltage VDCL1 is clamped to the capacitor voltage VC1 so that the out voltage Vo stands at (VAB+VC1+VDCL2). Since the DC voltage VAB and the capacitor voltage VC1 are constant, the output voltage Vo of the pulse output is held near constant.

In FIG. 4(b), the parts indicated by the dashed line represent suppressed voltages. Since the regenerated capacitor voltage VC1 is clamped, the voltage VDCL1 to be applied to the source end of the switching element changes into the voltage VC1, and thereby a voltage of (VDCL1-VC1) is suppressed. Furthermore, since the reactor voltage VDCL1 is suppressed, a component (VDCL1-VC1)x(n2p/nlp) of the reactor voltage VDCL2 generated in the second DC reactor 21b is also suppressed according to the turns ratio. Thus, a clamped component of the output voltage is (VDCL1-VC1)x(1+n2p/n1p).

The description about the above embodiments and modifications are examples of the DC pulse power supply device in accordance with the present invention. The present invention is therefore not limited to the above embodiments and can be changed or modified in various ways on the basis of the ideas of the invention, and these variations are not excluded from the scope of the invention.

### Industrial Applicability

The DC pulsed power supply device of the present invention can be applied as power source for supplying electric power to a plasma generation device, and furthermore can be used as power supply device for supplying a pulse output to a load of a pulse laserexcitation system, electrical discharge machine or similar.

### Reference Signs List

- 1: DC Pulse Power Supply Device
- 2: AC Power Supply
- 3: Output Cable
- 4: Load
- 10: DC Power Supply Unit
- 11: Rectifier
- 12: Snubber Circuit
- 13: Single-Phase Inverter Circuit
- 14: Single-Phase Transformer
- 15: Rectifier
- 16: Capacitor
- 20,20A,20B,20C,20D,20E: Pulsing Unit
- 21,21A,21B,21C,21D,21E: DC Reactor
- 21a: First DC Reactor
- 21b: Second DC Reactor
- 22: Switching Element
- 30: Regeneration Unit
- 31: Diode
- 32: Capacitor
- 33: Inverter Circuit
- 33a: Bridge Circuit
- 33b: Drive Circuit
- 34: Transformer
- 35: Rectifier
- 100: DC Pulse Power Supply Device
- 110: DC Power Supply
- 120: Step-Up Chopper Circuit
- 121: Inductor
- 122: Switching Element
- 123: Diode
- 124: Resistor
- QR1-QR4: Switching Element

## Claims

1. A DC pulse power supply device, comprising:
a DC power supply; and
a pulsing unit that generates a pulse output by using a step-up shopper circuit connected to the DC power supply, wherein
the DC pulse power supply device further comprises a regeneration unit that regenerates to the DC power supply a component of a reactor voltage in a DC reactor of the step-up chopper circuit that exceeds a set voltage.

2. The DC pulse power supply device according to claim 1, wherein the DC reactor is connected between a low-voltage side of the DC power supply and a source side of a switching element of the step-up chopper circuit,
a connection point on the source side of the switching element of the step-up chopper circuit being an end of a load side of the DC reactor or a tap on the DC reactor.

3. The DC pulse power supply device according to claim 2, wherein the DC reactor consists of a first DC reactor and a second DC reactor, magnetically coupled to each other,
one end of the first DC reactor being connected to an output end on the low-voltage side of the DC power supply,
one end of the second DC reactor being connected to an output end on a low-voltage side of the pulsing unit,
a connection point between the first DC reactor and the second DC reactor being connected to the source side of the switching element of the step-up chopper circuit, in which
the reactor voltage is a voltage across the first DC reactor.

4. The DC pulse power supply device according to claim 2 or 3, wherein the regeneration unit has its one end connected to an input terminal on the low-voltage side of the pulsing unit, so as to use a reactor voltage of the DC reactor based on a voltage on the low-voltage side as regenerated input voltage.

5. The DC pulse power supply device according to claim 1, wherein the DC reactor is connected between a high-voltage side of the DC power supply and a drain side of the switching element of the step-up chopper circuit,
a connection point on the drain side of the switching element of the step-up chopper circuit being an end of the load side of the DC reactor or a tap on the DC reactor.

6. The DC pulse power supply device according to claim 5, wherein the DC reactor consists of the first DC reactor and the second DC reactor, magnetically coupled to each other, in which
one end of the first DC reactor is connected to an output end of the high-voltage side of the DC power supply,
one end of the second DC reactor is connected to an output end of the high-voltage side of the pulsing unit, and
the connection point between the first DC reactor and the second DC reactor is connected to the drain side of the switching element of the step-up chopper circuit,
the reactor voltage being a voltage across the first DC reactor.

7. The DC pulse power supply device according to claim 5 or 6, wherein the regeneration unit has its one end connected to an input terminal on the high-voltage side of the pulsing unit, so as to use a reactor voltage of the DC reactor based on a voltage on the high-voltage side as regenerated input voltage.

8. The DC pulse power supply device according to claim 3 or 6, wherein the DC reactor consists of tapped autotransformers or multi-winding transformers of the first DC reactor and the second DC reactor.

9. The DC pulse power supply device according to any one of claims 1 to 8, wherein the regeneration unit comprises:
a capacitor connected in parallel with respect to the reactor voltage of the pulsing unit;
an inverter circuit that orthogonally transforms a capacitor voltage of the capacitor;
a transformer that transforms an AC voltage in the inverter circuit; and
a rectifier that rectifies the AC voltage in the transformer,
the regeneration unit using the set voltage as a voltage across the capacitor to regenerate a component of a voltage that exceeds the voltage across the capacitor to the DC power supply.
